# EUROPÄISCHE PATENTSCHRIFT

(11) **EP 1 619 048 B1**
(45) Veröffentlichungstag und Bekanntmachung des Hinweises auf die Patenterteilung: **11.09.2013**
(21) Anmeldenummer: 04016632.4
(22) Anmeldetag: 15.07.2004
(51) Int. Cl.: B60C 11/03, B60C 11/13

(54) **Fahrzeugluftreifen**
Pneumatic vehicle tire
Bandage pneumatique pour vehicule

(43) Veröffentlichungstag der Anmeldung: 25.01.2006
(73) Patentinhaber: Continental Reifen Deutschland GmbH, 30165 Hannover (DE)
(72) Erfinder: Heine, Stefan, 30163 Hannover (DE); Röger, Bernhard, 30823 Garbsen (DE); Kachel, Uwe, 38527 Meine (DE); Liederer, Werner, Dr., 30419 Hannover (DE)
(74) Vertreter: Finger, Karsten

(56) Entgegenhaltungen:
- EP-A- 0 420 834
- EP-A- 0 718 124
- EP-A1- 1 586 466
- DE-U- 20 216 992
- US-A- 4 848 429
- US-B2- 6 719 025

## Beschreibung

Die Erfindung betrifft einen Fahrzeugluftreifen mit einem Laufstreifen, welcher durch Umfangsnuten, Quernuten und dergleichen in Profilpositive gegliedert ist und welcher einen, bezogen auf das Fahrzeug, bei montiertem Reifen außenseitig gelegenen Außenabschnitt und einen der Fahrzeuglängsachse näher befindlichen Innenabschnitt aufweist, wobei der Außen- und der Innenabschnitt unterschiedliche Profilstrukturen und schulterseitig jeweils eine durch Quernuten gegliederte Blockreihe aufweisen.

Es sind sowohl PKW-Winterreifen als auch PKW-Sommerreifen bekannt, welche mit Laufstreifen versehen sind, die in zwei funktional unterschiedliche Bereiche aufgeteilt sind, wodurch das Laufstreifenprofil deutlich asymmetrisch gestaltet wird.

Ein Reifen der eingangs genannten Art ist beispielsweise aus der DE 202 16 992 U1 bekannt. Das Verhältnis der Negativfläche in der inneren Hälfte des Laufstreifens zu jener in der äußeren Hälfte des Laufstreifens beträgt zwischen 1,05 : 1 und 1,2 : 1. Der als Sommerreifen vorgesehene Fahrzeugluftreifen soll dadurch ein gutes Handling mit geringer Abnutzung, geringer Geräuschentwicklung und guter Wasserabführung aufweisen.

Ein Reifen mit einem weiteren asymmetrisch ausgeführten Laufstreifenprofil ist beispielsweise aus der DE 19 753 819 A1 bekannt. Bei diesem Reifen sind die Profilpositive im Außenbereich, danach in jenem Bereich des Reifens, welcher bei montiertem Reifen der Außenseite zugewandt ist, mit einer höheren Querschubsteifigkeit ausgebildet, als die Profilpositive im Innenbereich. Durch die derart steifere Ausbildung der Profilpositive in dem der Fahrzeugaußenseite zugehörigen Bereich des Laufstreifenprofils können die Handlingeigenschaften auf trockener Straße verbessert werden. Der Innenbereich des Laufstreifens ist für das Handling weniger wichtig, hat aber Bedeutung bezüglich des Griffes auf Eis, Schnee und Nässe und soll daher weniger steif ausgeführt sein.

Aus der US 6,719,025 A ist ferner ein Fahrzeugluftreifen bekannt, dessen Laufstreifen ebenfalls mit einer asymmetrischen Profilierung versehen ist, wobei, über den Umfang betrachtet, zwei Laufstreifenabschnitte aus verschiedenen Mischungen vorgesehen sind und gemäß einer bevorzugten Ausführungsform der eine Laufstreifenabschnitt ein anderes Profilmuster aufweist als der zweite Laufstreifenabschnitt. Jener Laufstreifenabschnitt, welcher bei am Fahrzeug montierten Reifen der Fahrzeuglängsachse näher liegt und daher den Innenschulterbereich des Reifens umfasst, ist aus einer Laufstreifenmischung hergestellt, deren Härte und deren dynamischer Speichermodul E' geringer ist als jene bzw. jener der Laufstreifenmischung, aus welcher der andere Laufstreifenabschnitt hergestellt ist. Ein Reifen mit einem derart ausgeführten Laufstreifen soll im Handling und im Komfort verbessert sein.

Der Erfindung liegt die Aufgabe zugrunde, einen Laufstreifen mit einer funktionalen Zuordnung der Reifeneigenschaften zu Außenabschnitt und Innenabschnitt zu optimieren, um den Zielkonflikt Verbesserung der Handlingeigenschaften unter trockenen Fahrbedingungen und Sicherstellen eines gleichförmigen Abriebes über die gesamte Breite des Laufstreifens zu lösen.

Gelöst wird die gestellte Aufgabe erfindungsgemäß dadurch, dass im Außenabschnitt über die Breite von 20 bis 45% der Laufstreifenbreite die Positivfläche um höchstens 2% größer ist und das Negativvolumen um mindestens 5% kleiner ist als im verbleibenden Bereich des Laufstreifens.

Die Kombination dieser Maßnahmen hat sich als besonders vorteilhaft herausgestellt. Der für die Handlingeigenschaften unter trockenen Fahrbedingungen zuständige Außenabschnitt wird durch das geringere Negativvolumen versteift. Der geringere Unterschied in der Positivfläche, gegebenenfalls stimmt diese im Innenabschnitt und Außenabschnitt überein, trägt dazu bei, dass über die Laufstreifenbreite ein gleichförmiger Abrieb gewährleistet wird. Für einen gleichförmigen Abrieb ist es von Vorteil, wenn der Unterschied in der Positivfläche höchstens 2% beträgt, wobei bei einer bevorzugten Ausführung die Positivflächen im Innen- und im Außenabschnitt übereinstimmen. Für die Handlingeigenschaften ist es günstig, wenn der Unterschied im Negativvolumen mindestens 5% beträgt.

Um einen gleichförmigen Abrieb aufrecht zu erhalten, ist es wichtig, dass eine Verringerung des Negativvolumens im Außenabschnitt keine oder kaum eine Änderung der Positivfläche zur Folge hat. Dazu sind gemäß der Erfindung einige Maßnahmen vorgesehen, die besonders vorteilhaft und leicht umzusetzen sind.

Beispielsweise können die Quernuten in der Schulterblockreihe des Außenabschnittes zumindest über einen Teil ihrer Erstreckung eine geringere Tiefe aufweisen, als die Quernuten in der Schulterblockreihe des Innenabschnittes .Der Unterschied in der Tiefe sollte mindestens 1 mm betragen.

Eine weitere diesbezüglich vorteilhafte Maßnahme besteht darin, dass zumindest ein Teil der Quernuten und/oder der Umfangsnuten im Außenabschnitt zumindest eine Flanke aufweist, deren Winkel zur radialen Richtung größer ist als der Flankenwinkel der Flanken der Quernuten und Umfangsnuten im Innenabschnitt.

Dabei ist es unter Bedachtnahme auf andere wichtige Eigenschaften des Laufstreifenprofils, beispielsweise das Traktionsvermögen und die Wasserableitfähigkeit, günstig, wenn der Winkel, den zumindest eine der Flanken der Quernuten in der Schulterblockreihe des Außenabschnittes mit der radialen Richtung einschließt, um mindestens 3° größer sein als der Flankenwinkel der Flanken der Quernuten der Schulterblockreihe des Innenabschnittes. Was die Umfangsnuten betrifft sollte der Winkel, den zumindest eine der Flanken von zumindest einer der Umfangsnuten im Außenabschnitt mit der radialen Richtung einschließt, um mindestens 5° größer ist als die Flankenwinkel der Umfangsnut(en) im Innenabschnitt.

Die Steifigkeit des Außenabschnittes kann durch einen weitere Maßnahme vorteilhaft beeinflusst werden. Dazu wird im Außenabschnitt eine

Laufstreifenmischung eingesetzt, deren dynamischer Speichermodul E' bei 55°C um mindestens 3 MPa größer ist als der dynamische Speichermodul E' einer Laufstreifenmischung, welche in zumindest einem Teilbereich des Innenabschnittes vorgesehen ist. Es empfiehlt sich, die Gummimischung im Innenabschnitt derart auszulegen, dass sie einen dynamischen Speichermodul E' von 6 bis 10 MPa aufweist. Die Gummimischung im Außenabschnitt sollte einen dynamischen Speichermodul E' von 9 bis 20 MPa aufweisen.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 eine Draufsicht auf eine Teilabwicklung einer Ausführungsform eines Laufflächenprofils eines Fahrzeugluftreifens und
Fig. 2 einen Querschnitt durch den Laufstreifenbereich über dessen Breite B, entlang der Linie II - II der Fig. 1.

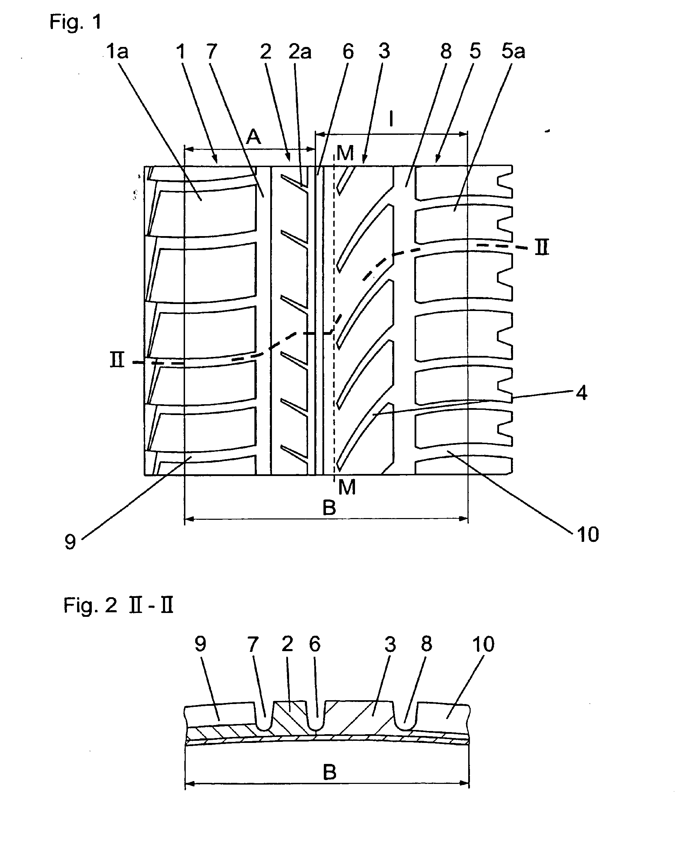

In Fig. 1 ist mit B die Breite des Reifens in der Bodenaufstandsfläche bezeichnet. Das in dieser Zeichnungsfigur gezeigte Laufstreifenprofil ist axial in zwei funktional unterschiedliche Bereiche aufgeteilt, einen Außenabschnitt A und einen Innenabschnitt I. Der Außenabschnitt A ist jener Bereich, welcher sich bei am Fahrzeug montierten Reifen an der Fahrzeugaußenseite befinden soll und welcher konstruktiv hinsichtlich einer Optimierung der Trockeneigenschaften des Laufstreifenprofils ausgelegt ist. Seine Breite beträgt bis zu 45% der Breite B. Der Innenbereich I des Laufstreifens wird hinsichtlich guter Griffeigenschaften ausgelegt, im Fall, dass es sich um einen Winterreifen handelt, hinsichtlich guter Winter-Griffeigenschaften. Die Linie M - M teilt den Laufstreifen in zwei Hälften, wobei die eine Laufstreifenhälfte die zum Außenabschnitt A gehörenden Profilstrukturen und einen schmalen Randabschnitt der zum Innenabschnitt I gehörenden Profilstrukturen aufweist, welche ansonsten die gesamte zweite Laufstreifenhälfte einnehmen.

Bei dem in Fig. 1 gezeigten Laufstreifenprofil wurde auf die Darstellung von Einschnitten, wie sie bei Laufstreifenprofilen für Winterreifen üblich sind, verzichtet. Es sind nur die von Nuten geprägten Profilstrukturen dargestellt. Zu diesen gehören im Laufstreifenaußenbereich A eine Schulterblockreihe 1 und ein Laufstreifenband 2, zu den Profilstrukturen, welche den Innenbereich I bilden, gehören ein durch Diagonalrillen 4 strukturiertes Umfangsband 3 und eine zweite Schulterblockreihe 5. Das Band 2 ist vom Band 3 durch eine geradlinig in Umfangsrichtung umlaufende und breite Umfangsnut 6 getrennt. Weitere breite und geradlinig in Umfangsrichtung umlaufende Umfangsnuten 7, 8 schließen innenseitig an die Schulterblockreihen 1, 5 an, wobei die im Innenbereich I des Laufstreifens befindliche Umfangsnut 8 die breiteste sämtlicher Umfangsnuten 6, 7, 8 ist. Die Trennung zwischen Innenbereich I und Außenbereich A erfolgt bei dem dargestellten Laufstreifenprofil durch die Umfangsnut 6, welche gegenüber der durch die Linie M - M gekennzeichneten Äquatorebene nach außen versetzt ist, sodass der Außenabschnitt A etwa 40% der Breite B der Bodenaufstandsfläche einnimmt. Das Laufstreifenband 2 ist durch Sacknuten 2a, die von der Umfangsnut 6 ausgehen und in einem Winkel von etwa 60° zur Umfangsrichtung verlaufen, strukturiert. Die Schulterblockreihen 1, 5 weisen Blöcke 1a, 5a auf, die durch Quernuten 9,10 voneinander getrennt sind.

Im Band 3 verlaufen Diagonalrillen 4, welche, ausgehend von der Umfangsnut 8, unter einem zur Umfangsrichtung abnehmenden Steigungswinkel verlaufen, insgesamt ist jedoch der Winkel, den sie mit Umfangsrichtung einschließen, kleiner als jener, den sie mit der Querrichtung einschließen.

Gemäß der Erfindung ist das Laufstreifenprofil derart ausgelegt, dass in dem den Außenabschnitt umfassenden Umfangsbereich über eine Breite von 20 bis 45 % der Breite B die Positivfläche (Anteil an der Gesamtaußenfläche, der mit dem Untergrund in Berührung kommt) um höchstens 5%, insbesondere um höchstens 2%, größer ist und das Negativvolumen um mindestens 3%, insbesondere um mindestens 5%, kleiner ist als die Positivfläche und das Negativvolumen im verbleibenden Umfangsbereich des Laufstreifens. Unter Negativvolumen wird dabei die Summe der Volumina sämtlicher Nuten - Umfangsnuten, Quernuten, Sacknuten, Diagonalrillen, etc. - bei neuem Reifen verstanden. Insbesondere sind diese beiden Umfangsbereiche der Außenabschnitt A und der Innenabschnitt I. Das geringere Negativvolumen im Außenabschnitt A geht daher nicht zu Lasten der Positivfläche - diese wird nicht vergrößert. Ein geringeres Negativvolumen ohne eine gleichzeitige Vergrößerung der Positivfläche wird insbesondere durch zwei Maßnahmen erreicht. Gemäß der einen Maßnahme weist im Außenabschnitt A zumindest ein Teil der Nuten, in der dargestellten Ausführung die Quernuten 9 der Schulterblockreihe 1, eine geringere Tiefe auf, als die Quernuten 10 der Schulterblockreihe 5. Diese Maßnahme kann auch nur über einen Teil der Erstreckung der Quernuten 9 und/oder nicht bei allen Quernuten 9 getroffen werden. Der Unterschied in der Tiefe beträgt mindestens 1 mm.

Die zweite Maßnahme, die getroffen wird, besteht darin, dass der Flankenwinkel (der Winkel zwischen der Nutflanke und der radialen Richtung) zumindest einer der beiden Flanken der Umfangsnuten 6, 7 und/oder der Quernuten 9 im Außenabschnitt A größer ausgeführt wird als die entsprechenden Flankenwinkel der Umfangsnut 8 bzw. der Quernuten 10 im Innenabschnitt I. Wird diese Maßnahme bei einer der Umfangsnuten 6, 7 getroffen, so beträgt der Unterschied zum Flankenwinkel der Umfangsnut 8 mindestens 5°, bezüglich der Quernuten 9, 10 beträgt der Unterschied mindestens 3°.

Beide Maßnahmen bewirken eine Versteifung des Außenabschnittes A in Umfangsrichtung, erhöhen den Reibungsbeiwert und verbessern somit das Bremsverhalten des Reifens auf trockenem Untergrund.

Als weitere Maßnahme ist vorgesehen, dass sich die Mischungen für die mit dem Untergrund in Kontakt tretenden Teile des Laufstreifens im Außenabschnitt A und im Innenabschnitt I voneinander unterscheiden. Im Innenabschnitt I wird eine Gummimischung verwendet, welche einen kleineren dynamischen Speichermodul E' aufweist als die Mischung für den mit dem Untergrund in Kontakt tretenden Bereich des Außenabschnittes A. Die Mischung im Innenabschnitt I wird derart ausgeführt, dass der dynamische Speichermodul E' bei 55°C zwischen 6 und 10 MPa beträgt, die Mischung im Außenabschnitt A des Laufstreifens weist einen dynamischen Speichermodul E' bei 55°C zwischen 9 und 20 MPa auf. Die Differenz der Speichermoduli E' zwischen der Gummimischung im Innenabschnitt I und im Außenabschnitt A beträgt mindestens 3 MPa.

In der nachstehenden Tabelle 1 sind die wichtigsten Bestandteile für eine Kautschukmischung 1 für den Innenabschnitt I und eine Kautschukmischung 2 für den Außenabschnitt A enthalten. Die Anteile sind jeweils auf 100 Gewichtsteile Kautschuk in der Mischung bezogen. Beide Mischungen 1, 2 basieren auf einem Polymersystem, welches eine oder mehrere der Kautschuke aus der Gruppe Naturkautschuk, Styrol-Butadien-Kautschuk und Butadienkautschuk in den angegebenen Anteilen enthält. Als weitere Bestandteile enthalten beide Kautschukmischungen Ruß, Silica (Kieselsäure), Mineralöl, andere Weichmacher, und die nicht gesondert angeführten üblichen Bestandteile für Laufstreifenmischungen in den üblichen Anteilen.

**Tabelle 1**

| | **Mischung 1** | **Mischung 2** |
|---|---|---|
| **SBR** | 40 | 95 |
| **BR** | 10 | ― |
| **NR** | 50 | 5 |
| **Silica** | 87 | 45 |
| **Ruß** | 14 | 48 |
| **Öl** | 10 | 39 |
| **Weichmacher** | 33 | ― |
| **Härte Shore A** | 61 | 72 |
| **E' [MPa] bei 55°C** | 8 | 15 |

Aus den Mischungen erstellte Vulkanisate wiesen eine Härte Shore A von 61 (Mischung 1) und eine Härte Shore A von 72 (Mischung 2) auf. Die Speichermoduli E' waren 8 MPa (Mischung 1) und 15 MPa (Mischung 2). Der dynamische Speichermodul E' ist ein Maß für die Steifigkeit einer Mischung und wird mit einem Eplexor bei der angegeben Temperatur ermittelt. Die Werte sind dabei Mittelwerte über eine dynamische Dehnung von 0,1% bis 12%.

Die Erfindung ist auf die dargestellten und beschriebenen Ausführungsvarianten nicht eingeschränkt. Vor Allem ist die Erfindung nicht auf das dargestellte Laufstreifenprofil bzw. dessen Ausgestaltung eingeschränkt. Das Profil kann so ausgelegt werden, dass die Positivfläche - die Fläche mit welcher der Reifen beim Abrollen mit dem Untergrund in Kontakt tritt, in beiden Laufstreifenhälften übereinstimmt oder auch unterschiedlich ist. Die Laufstreifenmischungen mit unterschiedlichen Speichermoduli E' können jeweils den gesamten Innen- und Außenabschnitt einnehmen. Daher kann unterhalb dieser Mischungen zumindest teilweise eine Schicht aus einer anderen Kautschukmischung vorgesehen werden.

## Patentansprüche

1. Fahrzeugluftreifen mit einem Laufstreifen, welcher durch Umfangsnuten (6, 7, 8), Quernuten (9, 10) und dergleichen in Profilpositive gegliedert ist und welcher einen, bezogen auf das Fahrzeug, bei montiertem Reifen außenseitig gelegenen Außenabschnitt (A) und einen der Fahrzeuglängsachse näher befindlichen Innenabschnitt (I) aufweist, wobei der Außen- und der Innenabschnitt (A, I) unterschiedliche Profilstrukturen und schulterseitig jeweils eine durch Quernuten (9, 10) gegliederte Blockreihe aufweisen,
**dadurch gekennzeichnet,**
**dass** im Außenabschnitt (A) über die Breite von 20 bis 45% der Laufstreifenbreite (B) die Positivfläche um höchstens 2% größer ist und das Negativvolumen um mindestens 5% kleiner ist als im verbleibenden Bereich des Laufstreifens.

2. Fahrzeugluftreifen nach Anspruch 1, **dadurch gekennzeichnet, dass** die Quernuten (1, 9) in der Schulterblockreihe (1) des Außenabschnittes (A) zumindest über einen Teil ihrer Erstreckung eine geringere Tiefe aufweisen, als die Quernuten (10) in der Schulterblockreihe (5) des Innenabschnittes (I).

3. Fahrzeugluftreifen nach Anspruch 2, **dadurch gekennzeichnet, dass** der Unterschied in der Tiefe mindestens 1 mm beträgt.

4. Fahrzeugluftreifen nach einem der Ansprüche 1 bis 3, **dadurch gekennzeichnet, dass** zumindest ein Teil der Quernuten (9) und/oder Umfangsnuten (6, 7) im Außenabschnitt (A) zumindest eine Flanke aufweist, deren Winkel zur radialen Richtung größer ist als der Flankenwinkel der Flanken der Quernuten (10) und Umfangsnuten (8) im Innenabschnitt (I).

5. Fahrzeugluftreifen nach Anspruch 4, **dadurch gekennzeichnet, dass** der Winkel, den zumindest eine der Flanken der Quernuten (9) in der Schulterblockreihe (1) des Außenabschnittes (A) mit der radialen Richtung einschließt, um mindestens 3° größer ist als der Flankenwinkel der Flanken der Quernuten (10) der Schulterblockreihe (5) des Innenabschnittes (I).

6. Fahrzeugluftreifen nach Anspruch 4, **dadurch gekennzeichnet, dass** der Winkel, den zumindest eine der Flanken von zumindest einer der Umfangsnuten (6, 7) im Außenabschnitt (A) mit der radialen Richtung einschließt, um mindestens 5° größer ist als die Flankenwinkel der Umfangsnut(en) (8) im Innenabschnitt (I).

7. Fahrzeugluftreifen nach einem der Ansprüche 1 bis 6, **dadurch gekennzeichnet, dass** im Außenabschnitt (A) eine Laufstreifenmischung eingesetzt ist, deren dynamischer Speichermodul E' bei 55°C um mindestens 3 MPa größer ist als der dynamische Speichermodul einer Laufstreifenmischung, welche über zumindest einen Teilbereich des Innenabschnittes (I) vorgesehen ist.

8. Fahrzeugluftreifen nach Anspruch 7, **dadurch gekennzeichnet, dass** die Gummimischung im Innenabschnitt (A) einen dynamischen Speichermodul E' von 6 bis 10 MPa aufweist.

9. Fahrzeugluftreifen nach Anspruch 7, **dadurch gekennzeichnet, dass** die Gummimischung im Außenabschnitt (I) einen dynamischen Speichermodul E' von 9 bis 20 MPa aufweist.

## Claims

1. Pneumatic vehicle tyre with a tread rubber, which is divided by circumferential grooves (6, 7, 8), transverse grooves (9, 10) and the like into profile positives and which has an outer portion (A), situated on the outside with respect to the vehicle when the tyre is fitted, and an inner portion (I), which is closer to the longitudinal axis of the vehicle, the outer and inner portions (A, I) having different profile structures and, on the shoulder side, respectively having a row of blocks divided by transverse grooves (9, 10), **characterized in that**,
in the outer portion (A), over the width of 20 to 45% of the tread rubber width (B), the positive area is greater by at most 2% and the negative volume is smaller by at least 5% than in the remaining region of the tread rubber.

2. Pneumatic vehicle tyre according to Claim 1, **characterized in that** the transverse grooves (1, 9) in the row of shoulder blocks (1) of the outer portion (A) have at least over part of their extent a smaller depth than the transverse grooves (10) in the row of shoulder blocks (5) of the inner portion (I).

3. Pneumatic vehicle tyre according to Claim 2, **characterized in that** the difference in depth is at least 1 mm.

4. Pneumatic vehicle tyre according to one of Claims 1 to 3, **characterized in that** at least some of the transverse grooves (9) and/or circumferential grooves (6, 7) in the outer portion (A) have at least one flank of which the angle to the radial direction is greater than the flank angle of the flanks of the transverse grooves (10) and circumferential grooves (8) in the inner portion (I).

5. Pneumatic vehicle tyre according to Claim 4, **characterized in that** the angle that at least one of the flanks of the transverse grooves (9) in the row of shoulder blocks (1) of the outer portion (A) forms with the radial direction is greater by at least 3° than the flank angle of the flanks of the transverse grooves (10) of the row of shoulder blocks (5) of the inner portion (I).

6. Pneumatic vehicle tyre according to Claim 4, **characterized in that** the angle that at least one of the flanks of at least one of the circumferential grooves (6, 7) in the outer portion (A) forms with the radial direction is greater by at least 5° than the flank angles of the circumferential groove(s) (8) in the inner portion (I).

7. Pneumatic vehicle tyre according to one of Claims 1 to 6, **characterized in that** in the outer portion (A) there is used a tread rubber mix of which the dynamic storage modulus E' at 55°C is greater by at least 3 MPa than the dynamic storage modulus of a tread rubber mix that is provided over at least a partial region of the inner portion (I).

8. Pneumatic vehicle tyre according to Claim 7, **characterized in that** the rubber mix in the inner portion (I) has a dynamic storage modulus E' of 6 to 10 MPa.

9. Pneumatic vehicle tyre according to Claim 7, **characterized in that** the rubber mix in the outer portion (A) has a dynamic storage modulus E' of 9 to 20 MPa.

## Revendications

1. Bandage pneumatique de véhicule comprenant une bande de roulement, qui est divisée par des rainures périphériques (6, 7, 8), des rainures transversales (9, 10) et similaires, en profilés positifs et qui présente une portion extérieure (A) placée du côté extérieur par rapport au véhicule lorsque le pneu est monté et une portion intérieure (I) située plus près de l'axe longitudinal du véhicule, les portions extérieure et intérieure (A, I) présentant des structures profilées différentes et, du côté de l'épaulement, à chaque fois une rangée de blocs divisée par des rainures transversales (9, 10),
**caractérisé en ce que**
la surface positive dans la portion extérieure (A) sur une largeur de 20 à 45 % de la largeur de la bande de roulement (B) est plus grande d'au plus 2 % et le volume négatif est inférieur d'au moins 5 % par rapport à la région restante de la bande de roulement.

2. Bandage pneumatique de véhicule selon la revendication 1, **caractérisé en ce que** les rainures transversales (1, 9) dans la rangée de blocs d'épaulement (1) de la portion extérieure (A) présentent au moins sur une partie de leur étendue une profondeur inférieure à celle des rainures transversales (10) dans la rangée de blocs d'épaulement (5) de la portion intérieure (I).

3. Bandage pneumatique de véhicule selon la revendication 2, **caractérisé en ce que** la différence de profondeur est d'au moins 1 mm.

4. Bandage pneumatique de véhicule selon l'une quelconque des revendications 1 à 3, **caractérisé en ce qu'**au moins une partie des rainures transversales (9) et/ou des rainures périphériques (6, 7) dans la portion extérieure (A) présente au moins un flanc dont l'angle par rapport à la direction radiale est supérieur à l'angle de flanc des flancs des rainures transversales (10) et des rainures périphériques (8) dans la portion intérieure (I).

5. Bandage pneumatique de véhicule selon la revendication 4, **caractérisé en ce que** l'angle formé par au moins l'un des flancs des rainures transversales (9) dans la rangée de blocs d'épaulement (1) de la portion extérieure (A) avec la direction radiale est supérieur d'au moins 3° à l'angle de flanc des flancs des rainures transversales (10) de la rangée de blocs d'épaulement (5) de la portion intérieure (I).

6. Bandage pneumatique de véhicule selon la revendication 4, **caractérisé en ce que** l'angle formé par au moins l'un des flancs d'au moins l'une des rainures périphériques (6, 7) dans la portion extérieure (A) avec la direction radiale est supérieur d'au moins 5° à l'angle de flanc de la ou des rainures périphériques (8) dans la portion intérieure (I).

7. Bandage pneumatique de véhicule selon l'une quelconque des revendications 1 à 6, **caractérisé en ce que** dans la portion extérieure (A) est utilisé un mélange pour bande de roulement dont le module de conservation dynamique E' à 55°C est supérieur d'au moins 3 MPa au module de conservation dynamique d'un mélange pour bande de roulement qui est prévu sur au moins une région partielle de la portion intérieure (I).

8. Bandage pneumatique de véhicule selon la revendication 7, **caractérisé en ce que** le mélange de caoutchouc dans la portion intérieure (I) présente un module de conservation dynamique E' de 6 à 10 MPa.

9. Bandage pneumatique de véhicule selon la revendication 7, **caractérisé en ce que** le mélange de caoutchouc dans la portion extérieure (A) présente un module de conservation dynamique E' de 9 à 20 MPa.
